# EUROPÄISCHE PATENTANMELDUNG

(11) **EP 4 180 580 A1**
(43) Veröffentlichungstag der Anmeldung: **17.05.2023**
(21) Anmeldenummer: 22206937.9
(22) Anmeldetag: 11.11.2022
(51) Int. Cl.: E01C 23/088, B60L 50/60, B60L 5/38

(54) **ÜBERWIEGEND ELEKTRISCH BETRIEBENE BODENBEARBEITUNGSMASCHINE**

(30) Priorität: 12.11.2021 DE 102021129619
(71) Anmelder: Wirtgen GmbH, 53578 Windhagen (DE)
(72) Erfinder: Bach, Markus, 53129 Bonn (DE); Berning, Christian, 53909 Zülpich (DE)
(74) Vertreter: Ruttensperger Lachnit Trossin Gomoll

(57) **Zusammenfassung**

Die vorliegende Erfindung betrifft eine selbstfahrende Bodenbearbeitungsmaschine (10) mit einem Maschinenrahmen (12) und einem Fahrwerk (24), wobei das Fahrwerk (24) auf einem Aufstandsuntergrund (U) der Bodenbearbeitungsmaschine (10) abrollbare Laufwerken (20, 22) umfasst, wobei der Maschinenrahmen (12) eine Arbeitsvorrichtung (34) trägt, wobei die Bodenbearbeitungsmaschine (10) als eine Hauptfunktionseinheit einen Arbeitsantrieb (80) aufweist, um die Arbeitsvorrichtung (34) zu einer Arbeitsbewegung für die Bodenbearbeitung anzutreiben und wobei die Bodenbearbeitungsmaschine (10) wenigstens eine weitere Funktionseinheit (28, 44, 84, 90, 91, 98, 100, 102, 104, 106, 108) aufweist, wobei die Bodenbearbeitungsmaschine (10) eine gemeinsame Kraftquelle (50) aufweist, welche sowohl die Energie für den Arbeitsantrieb (80) als auch die Energie für die weitere Funktionseinheit (28, 44, 84, 90,91, 98, 100, 102, 104, 106, 108) bereitstellt. Erfindungsgemäß ist vorgesehen, dass die gemeinsame Kraftquelle (50) eine gemeinsame elektrische Liefer-Schaltvorrichtung (52) umfasst, an welche jede Funktionseinheit (28, 44, 80, 84, 90, 91, 98, 100, 102, 104, 106, 108) aus der Hauptfunktionseinheit (80) und der wenigstens einen weiteren Funktionseinheit (28, 44, 84, 90, 91, 98, 100, 102, 104, 106, 108) elektrisch leitend angeschlossen ist, wobei die Hauptfunktionseinheit (80) einen Elektromotor (80) umfasst.

## Beschreibung

Die vorliegende Anmeldung betrifft ganz allgemein eine selbstfahrende Bodenbearbeitungsmaschine. Die Bodenbearbeitungsmaschine umfasst einen Maschinenrahmen und ein den Maschinenrahmen tragendes Fahrwerk. Das Fahrwerk umfasst eine Mehrzahl von auf einem Aufstandsuntergrund der Bodenbearbeitungsmaschine abrollbaren Laufwerken. Der Maschinenrahmen trägt eine Arbeitsvorrichtung zur Bodenbearbeitung. Die Bodenbearbeitungsmaschine weist als eine Hauptfunktionseinheit einen Arbeitsantrieb auf, um die Arbeitsvorrichtung zu einer für die Bodenbearbeitung bestimmungsgemäßen Arbeitsbewegung anzutreiben. Die Bodenbearbeitungsmaschine weist wenigstens eine weitere Funktionseinheit als einen mit Energie zu versorgenden Verbraucher auf. Die Bodenbearbeitungsmaschine weist eine gemeinsame Kraftquelle auf, welche sowohl die Energie für den Arbeitsantrieb als auch die Energie für die weitere Funktionseinheit bereitstellt.

Eine solche Bodenbearbeitungsmaschine ist allgemein bekannt. Beispiele hierfür sind in der DE 10 2017 220 518 A1 oder auch in der DE 10 2016 208 242 A1 offenbart.

Bei diesen bekannten Bodenbearbeitungsmaschinen ist die oben genannte gemeinsame Kraftquelle eine Brennkraftmaschine, welche eine Art Kraftwerk der Bodenbearbeitungsmaschine bildet. Die Brennkraftmaschine liefert über ihre Ausgangswelle unmittelbar die kinetische Energie für den Arbeitsantrieb unter Zwischenanordnung wenigstens eines Getriebes, in der Regel eines Riemen- und eines Planetengetriebes, zwischen der Ausgangswelle und der Arbeitsvorrichtung. Die Brennkraftmaschine treibt außerdem, in der Regel ebenfalls unter Zwischenanordnung eines Getriebes, eine Hydraulikpumpe an, welche Hydrauliköl in einem Hydraulikölkreislauf fördert und auf einem Betriebs-Hydraulikdruck hält. Die Hydraulikpumpe bildet daher eine weitere Kraftquelle der Bodenbearbeitungsmaschine. Da der Hydraulikölkreislauf seinen Energieinhalt und damit seine Fähigkeit, physikalische Arbeit zu leisten, durch den Betrieb der Brennkraftmaschine erhält, ist die Hydraulikpumpe eine sekundäre Kraftquelle, während die Brennkraftmaschine eine primäre Kraftquelle der bekannten Bodenbearbeitungsmaschinen ist.

Ebenso kann die bekannte Brennkraftmaschine in an sich bekannter Weise mit ihrer Ausgangswelle einen Generator antreiben, welcher elektrische Energie für elektrische Verbraucher und elektrische Speicher der Bodenbearbeitungsmaschine bereitstellt. Auch der Generator bildet somit eine sekundäre Kraftquelle der Bodenbearbeitungsmaschine.

Damit eine einzige Brennkraftmaschine als primäre Kraftquelle gleichzeitig mehrere sekundäre Kraftquellen und die Arbeitsvorrichtung antreiben kann, werden an Bodenbearbeitungsmaschinen häufig Verteilergetriebe eingesetzt, wobei eine Eingangswelle des Verteilergetriebes mit der Ausgangswelle der Brennkraftmaschine Bewegung und Drehmoment übertragend gekoppelt ist und wobei diese Eingangswelle über Getriebestufen im allgemeinsten Sinne mit einer Mehrzahl von Abtriebswellen Bewegung und Drehmoment übertragend gekoppelt ist, sodass an jeder der Abtriebswellen von der Brennkraftmaschine abgegebene kinetische Energie abgegriffen werden kann.

Zunehmend strenger werdende Emissionsvorschriften motivieren die Hersteller von Bodenbearbeitungsmaschinen, Schadstoffemissionen der Bodenbearbeitungsmaschinen konsequent zu reduzieren.

Es ist daher Aufgabe der vorliegenden Erfindung, eine Bodenbearbeitungsmaschine der eingangs genannten Art hinsichtlich einer Reduzierung der von ihr ausgehenden Schadstoffemissionen weiterzuentwickeln.

Die vorliegende Erfindung löst diese Aufgabe an der eingangs genannten Bodenbearbeitungsmaschine dadurch, dass die gemeinsame Kraftquelle eine gemeinsame elektrische Liefer-Schaltvorrichtung umfasst, an welche jede Funktionseinheit aus der Hauptfunktionseinheit und der wenigstens einen weiteren Funktionseinheit zur Übertragung von elektrischer Energie zwischen der Liefer-Schaltvorrichtung und der jeweiligen Funktionseinheit elektrisch leitend angeschlossen ist, wobei die Hauptfunktionseinheit einen Elektromotor zur Wandlung der an die Hauptfunktionseinheit übertragenen elektrische Energie in Bewegungsenergie umfasst.

Die Bodenbearbeitungsmaschine weist also anstelle der oben genannten Brennkraftmaschine als gemeinsame Kraftquelle der mehreren Funktionseinheiten eine elektrische Kraftquelle auf. Diese elektrische Kraftquelle umfasst eine elektrische Schaltung, die in der vorliegenden Anmeldung zur Unterscheidung von weiteren an der Bodenbearbeitungsmaschine vorgesehenen elektrischen Schaltungen als "Liefer-Schaltvorrichtung" bezeichnet ist. Bevorzugt ist die Liefer-Schaltvorrichtung zur Übertragung von elektrischer Leistung von wenigstens 75 kW, bevorzugt von wenigstens 95 kW, ausgebildet.

Im Gegensatz zur Brennkraftmaschine, welche zur Bereitstellung kinetischer Energie an ihrer Ausgangswelle einen in der Regel fossilen Kraftstoff verbrennt und somit Abgase als Schadstoffemission erzeugt, tritt durch die Bereitstellung von elektrischer Energie an der Liefer-Schaltvorrichtung unmittelbar keine Schadstoffemission auf. Die Emission von Abgasen im Umfeld der Bodenbearbeitungsmaschine ist somit betragsmäßig erheblich verringert oder sogar vollständig beseitigt.

Die Hauptfunktionseinheit mit dem Elektromotor kann so, gespeist von der Liefer-Schaltvorrichtung, die Arbeitsvorrichtung zu ihrer Arbeitsbewegung und damit zur Bodenbearbeitung antreiben. In einer bevorzugten Anwendung der Bodenbearbeitungsmaschine als Straßenfräse oder als Recycler oder als Surface-Miner umfasst die Arbeitsvorrichtung eine um eine Fräswalzenachse am Maschinenrahmen rotierbar angeordnete Fräswalze. Die Arbeitsbewegung ist dann eine Rotation um die Fräswalzenachse. Die Fräswalzenachse verläuft in üblicher Arbeitskonfiguration bevorzugt parallel zum Aufstandsuntergrund, auf dem die Bodenbearbeitungsmaschine aufsteht und besonders bevorzugt in Maschinenquerrichtung, also orthogonal sowohl zur Maschinenlängsrichtung als auch zur Hochachse der Maschine, wenngleich auch andere Orientierungen der Fräswalzenachse dauerhaft oder vorübergehend möglich sind.

Der Elektromotor der Hauptfunktionseinheit kann im betriebsbereiten Zustand der Bodenbearbeitungsmaschine ganz oder teilweise vom Fräswalzenrohr der Fräswalze umgeben sein. Der Elektromotor der Hauptfunktionseinheit ist dann bevorzugt ein rotatorischer Elektromotor, wobei die Drehachse des Rotors des Elektromotors bevorzugt die Fräswalzenachse ist. Bevorzugt treibt der Elektromotor der Hauptfunktionseinheit die Arbeitsvorrichtung zur Erzielung einer vorteilhaft geringen Bauteileanzahl des Antriebsstrangs der Hauptfunktionseinheit direkt und unmittelbar an. Der Rotor des Elektromotors ist dazu bevorzugt unmittelbar drehmomentübertragend mit der Arbeitsvorrichtung verbunden. Es findet dann keine Veränderung von Drehzahl und Drehmoment im Drehmoment-Übertragungspfad vom Elektromotor zur Arbeitsvorrichtung statt. Es soll jedoch nicht ausgeschlossen sein, dass zwischen dem Elektromotor der Hauptfunktionseinheit und der Arbeitsvorrichtung wenigstens ein Getriebe angeordnet ist. Dann kann abhängig von der Anzahl oder/und Art der zwischen Elektromotor und Arbeitsvorrichtung angeordneten Getriebe die Drehachse des Rotors parallel oder sogar in einem Winkel zur Fräswalzenachse angestellt verlaufen kann. Die Drehachse des Rotors des Elektromotors der Hauptfunktionseinheit kann daher sogar windschief zur Rotationsachse der Arbeitsvorrichtung, insbesondere der Fräswalze verlaufen.

Ebenso kann die Hauptfunktionseinheit eine Mehrzahl von Elektromotoren als Antrieb der Arbeitsvorrichtung umfassen. Die mehreren Elektromotoren können über ein Summierungsgetriebe zusammengefasst Drehmoment an einer gemeinsamen Abtriebswelle ausgeben.

Der Elektromotor der Hauptfunktionseinheit kann ein Gleichstrommotor oder ein Wechselstrommotor sein. Als letzterer ist ein Synchronmotor gegenüber einem Asynchronmotor wegen seiner Schlupffreiheit bevorzugt. Grundsätzlich kann jedoch jede Art von Elektromotor Verwendung finden.

Zur Versorgung von wenigstens zwei unterschiedlichen Funktionseinheiten, nämlich der Hauptfunktionseinheit und der weiteren Funktionseinheit mit elektrischer Energie kann die gemeinsame elektrische Liefer-Schaltvorrichtung einen Gleichstrom-Zwischenkreis umfassen oder ein solcher Gleichstrom-Zwischenkreis sein. Dies hat den Vorteil, dass an selbstfahrenden Arbeitsmaschinen bewährte Gleichstrom-Energiespeicher unmittelbar verwendet und an den Gleichstrom-Zwischenkreis angeschlossen werden können. Ebenso können an selbstfahrenden Maschinen bewährte Gleichstrom-Verbraucher verwendet werden. Ein Gleichstrom-Energiespeicher entspricht in seiner Funktion im Verhältnis zur Liefer-Schaltvorrichtung dem Kraftstofftank einer Bodenbearbeitungsmaschine im Verhältnis zur Brennkraftmaschine. Ein weiterer Vorteil neben der Emissionsfreiheit ist dabei, dass der Gleichstrom-Energiespeicher im Gegensatz zum Kraftstofftank seine gespeicherte Energie ohne Umwandlung durch Verbrennung und Kolbenantrieb effizienter von der Liefer-Schaltvorrichtung und damit von der gemeinsamen Kraftquelle an die Mehrzahl von Funktionseinheiten abgeben kann.

Nicht alle an die Liefer-Schaltvorrichtung angeschlossenen Funktionseinheiten benötigen üblicherweise elektrische Energie in einer einheitlichen Darreichungs- oder Erscheinungsform. Ebenso kann sein, dass nicht alle, möglicherweise sogar keine der an die Liefer-Schaltvorrichtung angeschlossenen Funktionseinheiten elektrische Energie in der Form benötigen oder verwenden können, in welcher sie eine an die Liefer-Schaltvorrichtung angeschlossene Energiequelle, beispielsweise der oben genannte Gleichspannungs-Energiespeicher, an die Liefer-Schaltvorrichtung abgibt.

Um die an der Liefer-Schaltvorrichtung abgreifbare elektrische Energie für unterschiedliche Funktionseinheiten nutzbar zu machen, kann zwischen wenigstens einer Funktionseinheit aus der Hauptfunktionseinheit und der wenigstens einen weiteren Funktionseinheit einerseits und der gemeinsamen elektrischen Liefer-Schaltvorrichtung andererseits eine Leistungsschaltung zwischengeschaltet sein. Die Leistungsschaltung kann dazu ausgebildet sein, wenigstens einen Parameter, der die von der Liefer-Schaltvorrichtung in die Leistungsschaltung eingegebene elektrische Energie betragsmäßig charakterisiert, betragsmäßig zu verändern und die so modifizierte elektrische Energie zur Funktionseinheit auszugeben. Insbesondere kann die Leistungsschaltung einen oder mehrere Stromrichter aufweisen.

Die Leistungsschaltung kann beispielsweise einen Gleichspannungswandler umfassen, welcher eine Gleichspannung der Liefer-Schaltvorrichtung in eine betragsmäßig abweichende Gleichspannung transformiert. Der die elektrische Energie der Liefer-Schaltvorrichtung betragsmäßig charakterisierende Parameter ist dann beispielsweise der Gleichspannungswert. Zusätzlich oder alternativ kann die Leistungsschaltung einen Wechselrichter umfassen. Dieser wandelt eine Gleichspannung der Liefer-Schaltvorrichtung in eine Wechselspannung. Der charakterisierende Parameter kann dann beispielsweise die Frequenz oder/und die Amplitude der Wechselspannung sein. Somit kann die Liefer-Schaltvorrichtung sowohl mit Gleichspannung betriebene Funktionseinheiten als auch mit Wechselspannung betriebene Funktionseinheiten mit elektrischer Energie versorgen. Diese Ausgestaltungen der Leistungsschaltung sind vor allem dann anwendbar, wenn die Liefer-Schaltvorrichtung den oben genannten Gleichstrom-Zwischenkreis umfasst.

Der Wechselrichter kann dazu ausgebildet sein, einen Eingangs-Gleichstrom in einen Ausgangs-Wechselstrom mit veränderlicher Frequenz zu wandeln, etwa durch eine Thyristorschaltung oder dergleichen, so dass mit dem Wechselrichter die Leistungsabgabe von Wechselstrommotoren, insbesondere Synchronmotoren, durch Veränderung der Frequenz des dem Wechselstrommotor zugeführten Wechselstroms erfolgen kann.

Grundsätzlich soll nicht ausgeschlossen sein, dass die Liefer-Schaltvorrichtung unmittelbar eine Wechselspannung abgibt, wenngleich dies für selbstfahrende Arbeitsmaschinen ungewöhnlich ist. In diesem Falle kann die genannte Leistungsschaltung einen Gleichrichter umfassen, um mit der Liefer-Schaltvorrichtung auch mit Gleichspannung zu versorgende Funktionseinheiten betreiben zu können.

Während die Hauptfunktionseinheit stets den Arbeitsantrieb der Arbeitsvorrichtung als der primären Zweckausrichtung der Bodenbearbeitungsmaschine bereitstellt, kann die wenigstens eine weitere Funktionseinheit unterschiedliche Funktionen erfüllen. Beispielsweise kann die wenigstens eine weitere Funktionseinheit eine Bewegungs-Funktionseinheit umfassen, welche in sie eingegebene elektrische Energie in Bewegungsenergie umwandelt. Eine solche Bewegungs-Funktionseinheit kann jegliche Funktionseinheit an der Bodenbearbeitungsmaschine sein, welche bestimmungsgemäß relativ zum Maschinenrahmen der Bodenbearbeitungsmaschine als einem ruhenden Bezugssystem der Bodenbearbeitungsmaschine eine Bewegung ausführt. Die Hauptfunktionseinheit ist demgemäß stets eine Bewegungs-Funktionseinheit.

Zusätzlich oder alternativ kann die wenigstens eine weitere Funktionseinheit eine Betriebs-Funktionseinheit umfassen, welche in sie eingegebene elektrische Energie einem bewegungslosen Verbraucher zuführt. "Bewegungslos" bedeutet dabei, dass der Verbraucher relativ zum Maschinenrahmen während und im Rahmen seines bestimmungsgemäßen Betriebs keine durch Energie von der Liefer-Schaltvorrichtung bewirkte Bewegung ausführt. Nicht ausgeschlossen soll jedoch sein, dass der bewegungslose Verbraucher in einem von einer Bedienperson manuell beweglichen Gehäuse oder an einem manuell beweglichen Träger angeordnet ist, um von der Bedienperson, beispielsweise nach ergonomischen Gesichtspunkten, positioniert zu werden. Ein solcher bewegungsloser Verbraucher bzw. eine solche Betriebs-Funktionseinheit kann eine Anzeigevorrichtung, eine Datenverarbeitungsvorrichtung oder eine Leuchtvorrichtung sein, etwa ein an einem Steuerpult angeordneter Bildschirm. Der Bildschirm kann manuell positionierbar und orientierbar sein. Ist der Bildschirm motorisch positionierbar oder/und orientierbar, dann bleibt der Bildschirm im Sinne der vorliegenden Anmeldung eine Betriebs-Funktionseinheit. Der zur Positionierung oder/und Orientierung des Bildschirms eingesetzte Stellantrieb ist dagegen eine Bewegungs-Funktionseinheit in obigem Sinne. Entsprechendes gilt für alle Funktionseinheiten, deren bestimmungsgemäßer Betrieb keine Bewegung umfasst, die jedoch selbst wiederum durch eine Bewegungs-Funktionseinheit bewegbar oder/und orientierbar sind.

Daher kann die wenigstens eine weitere Funktionseinheit wenigstens eine Einheit umfassen aus
a) einem Bewegungsantrieb, um die Bodenbearbeitungsmaschine zu einer Fahrbewegung auf dem Aufstandsuntergrund anzutreiben,
b) einem Lüfterantrieb, um einen an der Bodenbearbeitungsmaschine angeordneten Lüfter zur Bewegung anzutreiben,
c) einem Pumpenantrieb, um eine Pumpe zur Förderung eines Fluids anzutreiben,
d) einem Fördervorrichtungsantrieb, um eine Fördervorrichtung zum Förderbetrieb anzutreiben,
e) einem Stellantrieb, um eine relative Lage einer Funktionseinheit relativ zum Maschinenrahmen zu verändern,
f) einem Lenkantrieb, um den Lenkwinkel wenigstens eines Laufwerks relativ zum Maschinenrahmen zu verändern,
g) einem Bordnetz,
h) einer elektrischen Beleuchtung oder/und elektrische Signalanlage der Bodenbearbeitungsmaschine, und
i) einer elektrischen Steuervorrichtung.

Die in den Aufzählungspunkten a) bis f) der vorstehenden nicht-abschließenden Aufzählung genannten Einheiten sind Bewegungs-Funktionseinheiten. Die Einheiten der Aufzählungspunkte g) bis i) sind Betriebs-Funktionseinheiten im Sinne der vorliegenden Anmeldung.

Beispielsweise kann der Bewegungsantrieb zusätzlich oder alternativ zu den derzeit üblicherweise eingesetzten hydraulischen Antrieben (sogenannte "Hydromotoren") Elektromotoren aufweisen, welche Räder oder Laufketten als mögliche abrollbare Laufwerke der Bodenbearbeitungsmaschine zu einer Rotation bzw. Umlaufbewegung antreiben. Die Elektromotoren sind vorzugsweise rotatorische Elektromotoren, wobei Linearmotoren nicht ausgeschlossen sein sollen. Ebenso kann der Lüfterantrieb einen Elektromotor aufweisen, welcher das jeweils mit der Ausgangswelle des Elektromotors bewegungsübertragungsmäßig gekoppelte Lüfter- bzw. Flügelrad zur Rotation antreibt. Auch der Elektromotor eines Lüfterantriebs ist vorzugsweise ein rotatorischer Elektromotor.

Der Pumpenantrieb kann ein Antrieb einer beliebigen Pumpe, insbesondere Flüssigkeitspumpe, sein, etwa einer Hydraulikpumpe zur Förderung, insbesondere zur Zirkulation, von Hydrauliköl, einer Ölpumpe zur Förderung, insbesondere zur Zirkulation, von Schmieröl, eine Kühlmittelpumpe zur Förderung, insbesondere zur Zirkulation, von Kühlmittel, besonders bevorzugt zwischen einer zu kühlenden Vorrichtung und einem Wärmetauscher, und dergleichen. Der Pumpenantrieb kann zur Versorgung mit elektrischer Energie durch die Liefer-Schaltvorrichtung einen Elektromotor aufweisen, vorzugsweise einen rotatorischen Elektromotor, wobei zusätzlich oder alternativ ein linearer Elektromotor nicht ausgeschlossen sein soll.

Die Fördervorrichtung der Bodenbearbeitungsmaschine kann eine beliebige Fördervorrichtung sein, wie beispielsweise wenigstens ein an sich bekanntes Förderband. Es sollen jedoch auch andere Fördervorrichtungen nicht ausgeschlossen sein, wie beispielsweise eine Förderschnecke in einem Förderrohr oder ein mit Luftstrom fördernder Gebläseförderer. Letzterer findet etwa zur Staubabsaugung an der Bodenbearbeitungsmaschine Verwendung. Der Fördervorrichtungsantrieb kann einen linearen oder/und, und dies ist bevorzugt, einen rotatorischen Elektromotor umfassen.

Der Stellantrieb wurde oben bereits am Beispiel einer Positionierung oder/und Orientierung eines Bildschirms erläutert. Gleiches gilt für einen etwaigen Stellantrieb eines Fahrersitzes, eines verlagerbaren Schutzdaches des Fahrstands der Bodenbearbeitungsmaschine, einer aktuatorisch zu öffnenden oder/und zu schließenden Klappe oder Haube und dergleichen. Auch der Stellantrieb kann einen linearen oder/und rotatorischen Elektromotor umfassen.

Eine Sonderform des Stellantriebs bildet der Lenkantrieb, welcher für die Rotation eines Laufwerks um eine Lenkachse sorgt. Auch der Lenkantrieb kann einen linearen oder/und rotatorischen Elektromotor umfassen.

Alle oben genannten Antriebe können unter Zwischenanordnung eines Getriebes oder/und Gestänges mit der ihnen zugeordneten Vorrichtung zur Übertragung von Kraft oder/und Drehmoment und Bewegung gekoppelt sein.

Selbstverständlich kann die Bodenbearbeitungsmaschine wenigstens eine Funktionseinheit aufweisen, die weder mittelbar noch unmittelbar von der Liefer-Schaltvorrichtung mit Energie versorgt wird. Bevorzugt ist die Liefer-Schaltvorrichtung jedoch unmittelbarer oder mittelbarer Energielieferant für alle Funktionseinheiten der Bodenbearbeitungsmaschine.

Ebenso kann wenigstens einer oder können mehrere der oben genannten Antriebe fluidische Antriebe sein, wie beispielsweise eine hydraulische Kolben-Zylinder-Anordnung oder/und eine pneumatische Kolben-Zylinder-Anordnung. Ein solcher fluidischer Antrieb kann zum Heben und Senken des Maschinenrahmens relativ zu den Laufwerken angeordnet sein. Dann können die Antriebe elektrisch durch die Liefer-Schaltvorrichtung versorgbare schaltbare Ventile aufweisen. Weiter können die Antriebe den oben genannten Pumpenantrieb umfassen, welcher ausreichend Hydraulik- oder/und Pneumatikdruck für den Betrieb der fluidischen Antriebe erzeugt und bereitstellt. Anstelle eines fluidischen Hubantriebs des Maschinenrahmens relativ zu den Laufwerken kann auch hierfür ein elektrischer Hubantrieb, etwa ein Linearantrieb oder ein rotatorischer Antrieb mit Getriebe, angeordnet sein.

Das oben genannte Bordnetz als Betriebs-Funktionseinheit kann eine Grundversorgung von elektrischen Verbrauchern der Bodenbearbeitungsmaschine mit einer vorbestimmten elektrischen Spannung bereitstellen. An dieses Bordnetz können weitere elektrische Verbraucher angeschlossen sein. Eine elektrische Beleuchtung, wie beispielsweise Scheinwerfer, Rückleuchten oder eine Beleuchtung des Fahrstands, der Bodenbearbeitungsmaschine oder/und eine elektrische Signalanlage der Bodenbearbeitungsmaschine mit Warnlichtern oder/und Bremslichtern, Blinkern und dergleichen, kann bzw. können entweder an das Bordnetz oder unmittelbar an die Liefer-Schaltvorrichtung angeschlossen sein. Gleiches gilt für die wenigstens eine oben genannte elektrische Steuervorrichtung, welche bevorzugt wenigstens einen integrierten Schaltkreis oder/und einen Datenspeicher umfasst.

Dann, wenn die wenigstens eine weitere Funktionseinheit wenigstens einen Pumpenantrieb umfasst, kann der wenigstens eine Pumpenantrieb wenigstens eine der folgenden Ausgestaltungen aufweisen: ein Elektromotor treibt unter Zwischenanordnung eines Pumpenverteilergetriebes eine Mehrzahl von Pumpen an, und ein Elektromotor treibt, gegebenenfalls unter Zwischenanordnung eines Getriebes, bevorzugt eines drehzahluntersetzenden Getriebes, genau eine Pumpe an. Es kann also eine 1:1-Zuordnung zwischen einem Elektromotor und einer Pumpe oder eine 1:n-Zuordnung zwischen einem Elektromotor und einer Mehrzahl von Pumpen bestehen. Weiterhin kann vorgesehen sein, dass ein Teil von vorhandenen Pumpen jeweils einen eigenen Elektromotor als Antrieb aufweist und ein anderer Teil von vorhandenen Pumpen durch einen gemeinsamen Elektromotor angetrieben wird.

Eine besonders vorteilhafte und einfache Steuerung einer Pumpenleistung kann dadurch erhalten werden, dass wenigstens eine angetriebene Pumpe eine Konstantpumpe ist, deren Fördervolumen oder/und Förderdruck durch Änderung der Pumpendrehzahl änderbar ist. Somit kann durch Änderung der Drehzahl des die Pumpe antreibenden Elektromotors unmittelbar die Pumpenleistung gezielt verändert werden. Alternativ ist auch die Verwendung von Verstellpumpen vorstellbar.

Ein Vorteil elektrischer Antriebe liegt neben ihrem Stillstands-Drehmoment bei Drehzahl Null darin, dass diese nicht nur motorisch zur Beschleunigung, sondern auch generatorisch zur Verzögerung einer mit ihnen zur gemeinsamen Bewegung gekoppelten Baugruppe eingesetzt werden können. Um bei einer Verzögerung einer Bewegungs-Funktionseinheit die abgebaute kinetische Energie nicht nur als Wärme in die Umgebung zu dissipieren, sondern wenigstens einen Anteil davon für nachfolgende Beschleunigungsvorgänge wieder nutzen zu können, ist gemäß einer Weiterbildung der vorliegenden Erfindung vorgesehen, dass die gemeinsame Kraftquelle mit der gemeinsamen elektrischen Liefer-Schaltvorrichtung dazu ausgebildet ist, während eines Verzögerungsvorgangs einer an die Liefer-Schaltvorrichtung elektrisch leitend angeschlossenen Bewegungs-Funktionseinheit Bewegungsenergie der Bewegungs-Funktionseinheit als elektrische Energie zu rekuperieren. Dies gilt insbesondere für eine Rekuperation von elektrischer Energie aus einer Bewegung der Arbeitsvorrichtung mittels der dann generatorisch betriebenen Hauptfunktionseinheit. Als Beschleunigung gilt vorliegend im Übrigen auch die Arbeit gegen Reibungseffekte einer Bewegungs-Funktionseinheit zur Erzielung eines Betriebs mit konstanter Drehzahl. Auch hierfür wird ein beschleunigendes Drehmoment vom Elektromotor abgegeben, welches lediglich verzögernd wirkende Reibungsverluste kompensiert.

Zur Versorgung der Funktionseinheiten mit Leistung umfasst die gemeinsame Kraftquelle eine Primärenergiequelle. Die Primärenergiequelle ist an die gemeinsame elektrische Liefer-Schaltvorrichtung elektrisch leitend angeschlossen, optional unmittelbar angeschlossen, d. h. ohne Zwischenanordnung weiterer die Primärenergie nach Art oder/und Betrag umwandelnder Wandlervorrichtungen. Die Primärenergiequelle kann wenigstens eine Quelleinheit umfassen. Eine solche Quelleinheit kann ein Akkumulator sein, also ein wiederaufladbarer elektrischer Gleichstrom-Energiespeicher. Der Akkumulator, welcher umgangssprachlich an Fahrzeugen häufig unpräzise als "Batterie" bezeichnet wird, kann eine Ladeschaltung umfassen, welche eine Ladung des Akkumulators mit elektrischer Energie steuert. Eine solche Ladeschaltung ist insbesondere für einen vorstehend genannten Rekuperationsbetrieb vorteilhaft, um zeitabschnittsweise elektrische Energie dem Akkumulator zuzuführen und zeitabschnittsweise dem Akkumulator zu entnehmen.

Eine weitere mögliche Quelleinheit ist eine Batterie, also ein elektrischer Gleichstrom-Energiespeicher. Dieser muss nicht notwendigerweise wiederaufladbar sein.

Ebenso kann die Primärenergiequelle als Quelleinheit einen Generator umfassen, etwa in Gestalt eines Wandlers, welcher in funktionaler Umkehr eines Elektromotors Bewegung in elektrische Energie umwandelt. Der Generator kann Gleichstrom oder Wechselstrom abgeben. Bevorzugt wird der Generator an selbstfahrenden Fahrzeugen üblichen Gleichstrom erzeugen und abgeben.

Eine weitere mögliche Quelleinheit ist eine Brennstoffzellenanordnung, welche als galvanische Zelle die chemische Reaktionsenergie eines, bevorzugt kontinuierlich, zugeführten Brennstoffes und eines, bevorzugt kontinuierlich, zugeführten Oxidationsmittels in elektrische Energie wandelt. Die Primärenergiequelle kann zusätzlich oder alternativ eine Photovoltaikeinheit aufweisen, welche auf sie einfallendes Licht in elektrische Energie wandelt. Ebenso kann die Primärenergiequelle einen Stromabnehmer umfassen, welcher in körperlicher elektrisch leitender Verbindung mit einer außerhalb der Bodenbearbeitungsmaschine gelegenen Energiequelle für elektrische Energie steht. Der Stromabnehmer kann beispielsweise ein gemeinsam mit dem Maschinenrahmen der Bodenbearbeitungsmaschine relativ zum Aufstandsuntergrund der Bodenbearbeitungsmaschine beweglicher Schleifkontakt sein, welcher an einem außerhalb der Bodenbearbeitungsmaschine im Wesentlichen ortsfest d. h. in der Regel aufstandsuntergrundsfest, installierten Quellenleiter, wie etwa Drahtleitung oder Stromschiene, gleitend anliegt.

Zusätzlich oder alternativ kann die Primärenergiequelle allgemein eine Verbindungsschnittstelle zur Verbindung mit einer externen Stromquelle umfassen. Der zuvor genannte Stromabnehmer ist eine Sonderform einer Verbindungsschnittstelle zur Verbindung mit einer externen Stromquelle. Zusätzlich oder alternativ zu einem mechanischen bzw. körperlichen Schleifkontakt kann an der Verbindungsschnittstelle elektrische Energie auch induktiv und damit berührungslos übertragen werden. Ebenso kann die Verbindungsschnittstelle eine einfache Dose-Stecker-Verbindung umfassen, also eine Steckdose oder/und einen Stecker, wodurch eine kabelbasierte stromführende Verbindung hergestellt werden kann. Das stromführende Kabel kann abhängig von der Bewegung der Bodenbearbeitungsmaschine von einer Vorratstrommel ab- und wieder aufgewickelt werden. Die Vorratstrommel des Kabels kann mit dem Maschinenrahmen verbunden sein und mit der Bodenbearbeitungsmaschine mitgeführt werden oder kann ortsfest außerhalb der Bodenbearbeitungsmaschine stationiert sein. Ebenso kann die Vorratstrommel des Kabels während eines Betriebs der Bodenbearbeitungsmaschine an einem Begleitfahrzeug der Bodenbearbeitungsmaschine aufgenommen sein. Dann ist die Vorratstrommel zwar nicht an der Bodenbearbeitungsmaschine selbst vorgesehen, sondern außerhalb der Bodenbearbeitungsmaschine, aber nicht ortsfest.

Zur Sicherstellung einer redundanten Energieversorgung, welche ermöglicht, einen Ausfall der Primärenergiequelle und damit einen Betriebsausfall der Bodenbearbeitungsmaschine aufzufangen, kann die gemeinsame Kraftquelle zusätzlich zur Primärenergiequelle wenigstens eine Sekundärenergiequelle umfassen. Diese Sekundärenergiequelle ist bevorzugt an die gemeinsame elektrische Liefer-Schaltvorrichtung elektrisch leitend angeschlossen. Abweichend hiervon kann daran gedacht sein, die Sekundärenergiequelle lediglich ohne Anschluss an die Liefer-Schaltvorrichtung an der Bodenbearbeitungsmaschine mitzuführen und erst im Bedarfsfall an die Liefer-Schaltvorrichtung anzuschließen. Zur Sekundärenergiequelle gilt das oben zur Primärenergiequelle Gesagte entsprechend. Die Sekundärenergiequelle kann eine oder mehrere der oben für die Primärenergiequelle genannten Quelleinheiten umfassen.

Weiterhin kann daran gedacht sein, dass wenigstens eine Quelle aus Primärenergiequelle und Sekundärenergiequelle, bevorzugt auch, zur Ladung eines elektrischen Energiespeichers ausgebildet und angeordnet ist. Der elektrische Energiespeicher kann von einer Sekundärenergiequelle ladbare Primärenergiequelle oder von der Primärenergiequelle oder/und einer weiteren Sekundärenergiequelle ladbare Sekundärenergiequelle sein.

Zwischen wenigstens einer Energiequelle aus der Primärenergiequelle und der Sekundärenergiequelle bzw. zwischen wenigstens einer Quelleinheit der Primärenergiequelle oder/und der Sekundärenergiequelle einerseits und der gemeinsamen elektrischen Liefer-Schaltvorrichtung andererseits kann eine Einspeiseschaltung zwischengeschaltet sein. Diese kann die von der wenigstens einen Quelleinheit bzw. von der wenigstens einen Energiequelle aus Primärenergiequelle und Sekundärenergiequelle unmittelbar bereitgestellte elektrische Energie in eine für die Funktionseinheiten bzw. für die Liefer-Schaltvorrichtung nutzbare Form wandeln. Hierzu ist die Einspeiseschaltung bevorzugt dazu ausgebildet, wenigstens einen Parameter, der die von der Energiequelle in die Einspeiseschaltung eingegebene elektrische Energie betragsmäßig charakterisiert, wie etwa bereitgestellte Spannung, bereitgestellte Frequenz im Falle eines Wechselstroms, und dergleichen, betragsmäßig zu verändern und die so modifizierte elektrische Energie an die gemeinsame elektrische Liefer-Schaltvorrichtung auszugeben. Insbesondere kann die Einspeiseschaltung einen Stromrichter aufweisen.

Beispielsweise kann die Einspeiseschaltung wenigstens eine Vorrichtung umfassen aus einem Gleichrichter, welcher Wechselspannung in Gleichspannung umwandelt, und einem Gleichspannungswandler welcher eine bereitgestellte Gleichspannung betragsmäßig verändert, also vergrößert oder verringert.

Ist die Bodenbearbeitungsmaschine mit einer Wechselstromquelle verbunden, welche in der Regel eine elektrische Wechselspannung fester Frequenz liefert, so können in vorteilhafter Weise ein Gleichrichter als Einspeiseschaltung, ein Gleichstrom-Zwischenkreis und ein Wechselrichter mit veränderlich einstellbarer Ausgangsfrequenz einen Frequenzumrichter bilden, mit welchem Wechselstrom mit fester Eingangsfrequenz in einen an einen Verbraucher abgegebenen Strom mit veränderlicher Frequenz gewandelt werden kann. Dadurch kann trotz Bezugs eines Stroms mit fester Frequenz ein Elektromotor als der Verbraucher durch Veränderung der Frequenz des ihm zugeführten Stroms in seiner Leistungsabgabe beeinflusst und somit gesteuert werden.

Grundsätzlich kann die Bodenbearbeitungsmaschine zum Betrieb eines bordeigenen Generators eine Brennkraftmaschine aufweisen. Bevorzugt umfasst die Nenn-Betriebsleistung der Brennkraftmaschine nicht mehr als 50 % der Nenn-Gesamtbetriebsleistung der Bodenbearbeitungsmaschine, insbesondere der Liefer-Schaltvorrichtung, um zu gewährleisten, dass die von der Bodenbearbeitungsmaschine ausgehende Abgasemission einen vorbestimmten Grenzwert nicht übersteigt. Damit kann außerdem sichergestellt werden, dass die von der Bodenbearbeitungsmaschine ausgehende Abgasemission betragsmäßig erheblich geringer ist als jene von zum Anmeldezeitpunkt üblichen Bodenbearbeitungsmaschinen, bei welchen eine Brennkraftmaschine die zentrale Kraftquelle für die gesamte Bodenbearbeitungsmaschine ist. Bevorzugt ist die Bodenbearbeitungsmaschine von einer Brennkraftmaschine frei. Als Brennkraftmaschine gilt dabei jede Kraftmaschine, welche durch Verbrennung von Kraftstoffen die innere Energie der Kraftstoffe unter Inkaufnahme üblicher Verluste in kinetische Energie umsetzt.

Die vorliegende Erfindung wird nachfolgend anhand der beiliegenden Zeichnungen näher erläutert werden. Es stellt dar:

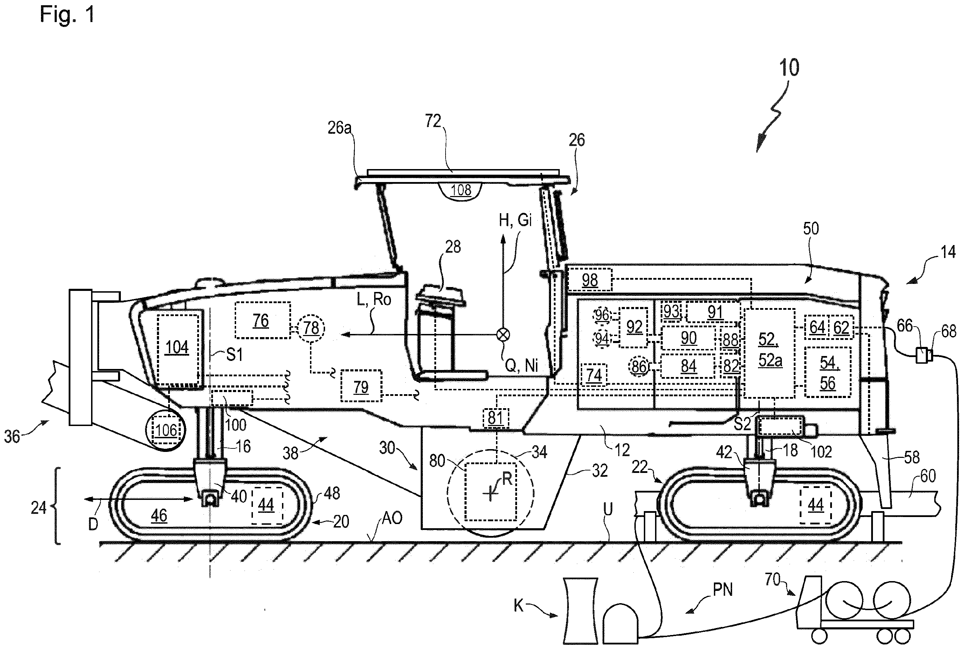

- Figur 1: eine grobschematische Seitenansicht einer erfindungsgemäßen Bodenbearbeitungsmaschine in beispielhafter Gestalt einer Straßengroßfräse.

In Figur 1 ist eine erfindungsgemäße Ausführungsform einer Bodenbearbeitungsmaschine in Gestalt einer Boden- oder Straßenfräse allgemein mit 10 bezeichnet. Sie umfasst einen Maschinenrahmen 12, welcher das Grundgerüst für einen Maschinenkörper 14 bildet. Der Maschinenkörper 14 umfasst den Maschinenrahmen 12 und die mit dem Maschinenrahmen verbundenen, gegebenenfalls relativ zu diesem beweglichen, Bauteile der Maschine 10.

Der Maschinenkörper 14 umfasst vordere Hubsäulen 16 und hintere Hubsäulen 18, welche einenends mit dem Maschinenrahmen 12 und anderenends mit vorderen Laufwerken 20 bzw. mit hinteren Laufwerken 22 verbunden sind. Der Abstand des Maschinenrahmens 12 von den Laufwerken 20 und 22 ist durch die Hubsäulen 16 und 18 veränderbar.

Die Laufwerke 20 und 22 sind beispielhaft als Kettenlaufwerke dargestellt. Einzelne oder alle Laufwerke 20 oder/und 22 können abweichend hiervon auch Radlaufwerke sein.

Der Betrachter von Figur 1 blickt auf die Bodenbearbeitungsmaschine oder kurz "Maschine" 10 mit Blickrichtung parallel zu der zur Zeichenebene von Figur 1 orthogonalen Maschinenquerrichtung Q. Eine zur Maschinenquerrichtung Q orthogonale Maschinenlängsrichtung ist mit L bezeichnet und verläuft parallel zur Zeichenebene von Figur 1. Eine Maschinenhöhenrichtung H verläuft ebenfalls parallel zur Zeichenebene von Figur 1 und orthogonal zur Maschinenlängs- und zur Maschinenquerrichtung L bzw. Q. Die Pfeilspitze der Maschinenlängsrichtung L in Figur 1 weist in Vorwärtsrichtung. Die Maschinenhöhenrichtung H verläuft parallel zur Gierachse Gi der Maschine 10, die Maschinenlängsrichtung L verläuft parallel zur Rollachse Ro und die Maschinenquerrichtung Q verläuft parallel zur Nickachse Ni.

Die Bodenbearbeitungsmaschine 10 kann einen Fahrstand 26 aufweisen, von dem aus ein Maschinenführer über ein Steuerpult 28 als einer Steuervorrichtung die Maschine 10 steuern kann.

Unter dem Maschinenrahmen 12 ist eine Arbeitsbaugruppe 30 angeordnet, hier beispielhaft als Fräsbaugruppe 30 mit einer in einem Fräswalzenkasten 32 aufgenommenen Fräswalze 34 dargestellt, die um eine in Maschinenquerrichtung Q verlaufende Fräsachse R rotierbar ist, um damit während einer Bodenbearbeitung Untergrundmaterial ausgehend von der Aufstandsoberfläche AO des Aufstandsuntergrunds oder kurz "Untergrunds" U mit einer durch die relative Höhenlage des Maschinenrahmens 12 bestimmten Frästiefe abtragen zu können. Die Fräswalze 34 ist daher eine Arbeitsvorrichtung im Sinne der vorliegenden Anmeldung.

Die Höhenverstellbarkeit des Maschinenrahmens 12 durch die Hubsäulen 16 und 18 dient bei der dargestellten Maschine auch der Einstellung der Fräs- oder allgemein Arbeitstiefe der Maschine 10 bzw. der Fräsbaugruppe 30 bei der Bodenbearbeitung. Es handelt sich bei der beispielhaft dargestellten Bodenbearbeitungsmaschine 10 um eine Großfräse, für die die Anordnung der Fräsbaugruppe 30 in Maschinenlängsrichtung L zwischen und mit Abstand von den vorderen und den hinteren Laufwerken 20 bzw. 22 typisch ist. Derartige Großfräsen oder auch bodenabtragende Maschinen im Allgemeinen weisen üblicherweise eine Transportvorrichtung auf, um abgetragenes Bodenmaterial von der Maschine 10 weg zu transportieren. Von einer auch bei der Maschine 10 grundsätzlich vorhandenen Transportvorrichtung ist aus Gründen besserer Übersichtlichkeit in Figur 1 nur ein Abwurfband 36 teilweise mit seinem dem Maschinenrahmen 12 näheren Endbereich dargestellt. Das Abwurfband 36 wird durch ein vom Fräswalzenkasten 32 ausgehendes, in Figur 1 nicht dargestelltes, jedoch im Bereich 38 angeordnetes Übergabeband mit abgetragenem Bodenmaterial beschickt, welches das Abwurfband 36 an der als Frontlader-Maschine ausgestalteten Maschine 10 an ein der Maschine vorausfahrendes, in Figur 1 ebenfalls nicht dargestelltes Transportfahrzeug übergibt.

In der Seitenansicht von Figur 1 nicht zu erkennen ist, dass die Maschine 10 sowohl in ihrem vorderen Endbereich als auch in ihrem hinteren Endbereich jeweils zwei Hubsäulen 16 bzw. 18 mit jeweils einem damit verbundenen Laufwerk 20 bzw. 22 aufweist. Die vorderen Hubsäulen 16 sind weiterhin in an sich bekannter Weise jeweils mittels einer Laufwerk-Verbindungsstruktur 40, etwa einer das Laufwerk 20 in Maschinenquerrichtung Q übergreifenden Verbindungsgabel, mit den Laufwerken 20 gekoppelt. Die hinteren Hubsäulen 18 sind mit ihrem jeweiligen Laufwerk 22 über eine mit der vorderen Laufwerk-Verbindungsstruktur 40 identisch aufgebaute hintere Laufwerk-Verbindungsstruktur 42 verbunden. Die Laufwerke 20 und 22 sind im Wesentlichen identisch aufgebaut und bilden das Fahrwerk 24 der Maschine. Die Laufwerke 20 und 22 sind im dargestellten Beispiel elektromotorisch angetrieben, und zwar durch je einen Elektromotor 44 pro Laufwerk 20 bzw. 22.

Das Laufwerk 20 mit einer durch den Doppelpfeil D angedeuteten Laufrichtung weist im dargestellten Beispiel eine radial innere Aufnahme- und Führungsstruktur 46 auf, welche den dem Laufwerk 20 zugeordneten Elektromotor 44 trägt und an welcher eine umlaufbare Laufkette 48 angeordnet und zur Umlaufbewegung geführt ist. Entsprechendes gilt für das Laufwerk 22.

Die Hubsäule 16 und mit ihr das Laufwerk 20 sind durch eine nicht näher dargestellte Lenkvorrichtung um eine Lenkachse S1 drehbar. Bevorzugt zusätzlich, aber auch alternativ kann die Hubsäule 18 und mit ihr das Laufwerk 22 durch eine Lenkvorrichtung um eine zur Lenkachse S1 parallele Lenkachse S2 drehbar sein.

Die Maschine umfasst eine Kraftquelle 50, welche eine zentrale Energieversorgung der Maschine 10 darstellt. Zumindest versorgt die Kraftquelle 50 mehrere Funktionseinheiten der Maschine 10 mit Energie, und zwar unmittelbar mit elektrischer Energie.

Die Kraftquelle 50 umfasst eine am Maschinenrahmen 12 aufgenommene Liefer-Schaltvorrichtung 52. Die Liefer-Schaltvorrichtung 52 ist vorliegend als Gleichstrom-Zwischenkreis 52a ausgestaltet.

Die Liefer-Schaltvorrichtung 52 erhält im dargestellten Ausführungsbeispiel elektrische Energie von einer Vielzahl von elektrischen Energiequellen. Als bordeigene Energiequelle, beispielsweise als Primärenergiequelle 54, ist an der Maschine 10 ein Akkumulator 56 mitgeführt, welcher die Liefer-Schaltvorrichtung 52 mit Gleichstrom speist. Der wiederaufladbare Akkumulator 56 kann die in ihm gespeicherte elektrische Energie unmittelbar an die Liefer-Schaltvorrichtung 52 ausgeben, da die Ausgabe-Gleichspannung des Akkumulators 56 mit der Betriebs-Gleichspannung der Liefer-Schaltvorrichtung 52 übereinstimmt. Sollte dies nicht der Fall sein, kann zwischen dem Akkumulator 56 und der Liefer-Schaltvorrichtung 52 ein Gleichspannungswandler angeordnet sein.

Neben dem Akkumulator 56 weist die Maschine 10 zum Zwecke der Erläuterung eine Vielzahl von Sekundärenergiequellen auf. Die Aufteilung in Primär- und Sekundärenergiequelle ist lediglich beispielhaft und kann von dem vorliegend dargestellten Beispiel abweichen. Gleichwohl ist die Annahme eines leistungsstarken Akkumulators 56 als Primärenergiequelle 54 der Maschine 10 sinnvoll.

Als erste Sekundärenergiequelle kann die Maschine 10 und insbesondere die Kraftquelle 50 einen Stromabnehmer 58 aufweisen, welcher Wechselstrom von einer Stromschiene 60 abgreift, die durch ein von einem Kraftwerk K gespeistes öffentliches Stromnetz PN versorgt wird.

Der Stromabnehmer 58 ist unmittelbar mit einem Gleichrichter 62 verbunden, welcher den abgegriffenen Wechselstrom des öffentlichen Netzes in eine für die Liefer-Schaltvorrichtung 52 nutzbare Gleichspannung umwandelt. Mit dem Gleichrichter 62 kann ein Gleichspannungswandler 64 verbunden sein, welcher die vom Gleichrichter 62 ausgegebene Gleichspannung auf das Gleichspannungsniveau der Liefer-Schaltvorrichtung 52 wandelt.

Eine weitere Sekundärenergiequelle stellt ein kabelgebundener Steckeranschluss 66 dar, beispielsweise in Gestalt einer Steckdose, welche durch ein passendes Gegenstück 68, beispielsweise einen Stecker, ebenfalls mit dem öffentlichen Netz PN verbunden sein kann. Da somit auch über den Steckeranschluss 66 Wechselstrom erhalten wird, die Liefer-Schaltvorrichtung 52 jedoch Gleichspannung benötigt, ist auch der Steckeranschluss 66 mit dem Gleichrichter 62 und dem Gleichspannungswandler 64 verbunden.

Um der Maschine 10 trotz der Kabelverbindung mit dem öffentlichen Netz PN ausreichend Bewegungsspielraum zu ermöglichen, kann die Kabelverbindung der Maschine 10 mit dem öffentlichen Netz PN über ein Kabeltrommel-Fahrzeug 70 erfolgen, welches die Maschine 10 im Betrieb begleitet.

Eine weitere Sekundärenergiequelle kann ein Fotovoltaik-Paneel 72 sein, welches beispielsweise auf der Außenseite des Schutzdaches 26a des Fahrstands 26 angeordnet ist. Da derartige Fotovoltaik-Paneele 72 in der Regel eine Gleichspannung abgeben, ist das Fotovoltaik-Paneel 72 unter Zwischenanordnung eines Gleichspannungswandlers 74 elektrisch leitend mit der Liefer-Schaltvorrichtung 52 verbunden.

Um im Bedarfsfall elektrische Energie zum Betrieb der Maschine 10 selbst erzeugen zu können, weist die Maschine 10 als weitere Sekundärenergiequelle eine Brennkraftmaschine 76 auf, welche mit ihrer Ausgangswelle einen Generator 78 antreiben kann. Der Generator 78 ist über eine geeignete Leistungsschaltung mit der Liefer-Schaltvorrichtung 52 elektrisch leitend verbunden, sodass elektrische Energie vom Generator 78 in der passenden Form und mit dem passenden Spannungsniveau an die Liefer-Schaltvorrichtung 52 abgegeben wird.

Ebenso kann die Bodenbearbeitungsmaschine 10 als alternative oder zusätzliche Sekundärenergiequelle eine Brennstoffzellenanordnung 79 aufweisen, welche die von ihr erzeugte elektrische Energie, gegebenenfalls über eine geeignete Leistungsschaltung, der Liefer-Schaltvorrichtung 52 zuführt.

Auf der Abgabeseite liefert die Liefer-Schaltvorrichtung 52 Gleichspannung bzw. Gleichstrom an eine Mehrzahl von Funktionseinheiten. Die Hauptfunktionseinheit der Bodenbearbeitungsmaschine 10 ist ein Elektromotor 80, welcher den Drehantrieb der Fräswalze 34 bildet. Zwischen dem Elektromotor 80 und der Fräswalze 34 kann ein Getriebe zwischenangeordnet sein. Der Elektromotor 80 kann jedoch auch die Fräswalze 34 unmittelbar zur Drehung antreiben. Ebenso kann zwischen der Liefer-Schaltvorrichtung 52 und dem Elektromotor 80 eine Leistungsschaltung 81, etwa ein Gleichspannungswandler oder/und ein Wechselrichter, angeordnet sein, um die von der Liefer-Schaltvorrichtung 52 abgegebene elektrische Energie in eine den Betrag oder/und der Form nach für den Elektromotor 80 geeignete Energieform zu bringen. Eine solche Lieferschaltung kann einen Gleichspannungswandler oder/und einen Wechselrichter umfassen. Für das vorliegende Ausführungsbeispiel sei jedoch der Elektromotor 80 als ein unmittelbar von der Liefer-Schaltvorrichtung 52 versorgbarer Gleichstrommotor angenommen. Alternativ oder zusätzlich kann der Elektromotor 80 über eine integrierte Leistungsregelung verfügen, mittels welcher die Motorleistung des Elektromotors 80 gezielt veränderbar ist, beispielsweise unter Verwendung von Steuerbefehlen des Steuerpults 28.

Neben dem Elektromotor 80 als der Hauptfunktionseinheit versorgt die Liefer-Schaltvorrichtung 52 zahlreiche weitere Funktionseinheiten.

So versorgt die Liefer-Schaltvorrichtung 52 im Ausführungsbeispiel unter Zwischenschaltung eines Wechselrichters 82 einen Synchronmotor 84, welcher unmittelbar eine Konstantpumpe 86 eines Hydraulikkreislaufs antreibt. Durch die Konstantpumpe 86, deren Fördervolumen unmittelbar durch ihre Drehzahl regelbar ist, wird ein Druckniveau in dem Hydraulikölkreislauf bereitgestellt, welches den Betrieb von hydraulischen Kraftgeräten an der Maschine 10 erlaubt, wie beispielsweise den Hubsäulen 16 und 18.

Als weitere Funktionseinheit versorgt die Liefer-Schaltvorrichtung 52 unter Zwischenschaltung eines Gleichspannungswandlers 88 einen Gleichstrommotor 90, welcher mittels eines Pumpenverteilergetriebes 92 eine erste Pumpe 94 zur Förderung von flüssigem Kühlmedium und eine zweite Pumpe 96 zur Förderung eines weiteren flüssigen Mediums, beispielsweise eines Kältekreislaufmediums einer Klimaanlage, antreibt.

Ein unmittelbar durch die die Liefer-Schaltvorrichtung 52 mit Gleichstrom versorgter Gleichstrom-Lüftermotor 91 treibt einen Lüfter 93 an, um wenigstens ein flüssiges Medium, etwa das Kältekreislaufmedium, das Kühlmedium, das Hydrauliköl oder von einer nicht dargestellten Pumpe gefördertes Schmieröl konvektiv zu kühlen.

Darüber hinaus versorgt die Liefer-Schaltvorrichtung 52 als weitere Funktionseinheiten einen elektrischen Stellantrieb 98 zur Verstellung des Schutzdaches 26a des Fahrstands 26 zwischen der in Figur 1 gezeigten Betriebsstellung und einer abgesenkten Verstauungsstellung, sowie einen vorderen elektrischen Lenkantrieb 100 und einen hinteren elektrischen Lenkantrieb 102 mit elektrischem Gleichstrom. Ebenso versorgt die Liefer-Schaltvorrichtung 52 als weitere Funktionseinheiten einen elektrischen Schwenkantrieb 104 des Abwurfbandes 36 als einer Fördervorrichtung der Maschine 10 und den Umlaufantrieb 106 des Abwurfbandes 36 zur umlaufenden Bewegung mit Gleichstrom.

Schließlich versorgt die Liefer-Schaltvorrichtung 52 das Steuerpult 28 und eine Beleuchtung 108 des Fahrstands 26 mit Gleichstrom. Die Beleuchtung 108 kann unter Zwischenschaltung eines Bordnetzes mit Gleichstrom versorgt sein, sodass die Liefer-Schaltvorrichtung 52, beispielsweise nach Transformation des Gleichstroms durch einen Gleichspannungswandler, ein Bordnetz mit vorbestimmter Gleichspannung, etwa 24 V, versorgt, wobei an das Bordnetz wiederum die Beleuchtung 108 oder auch das Steuerpult 28 mit seiner Einrichtung zur Speicherung und Verarbeitung von Daten angeschlossen sind.

Somit kann die Bodenbearbeitungsmaschine 10 vollelektrisch betrieben werden. Für eine möglichst schnelle Bereitstellung von elektrischer Energie an der Bodenbearbeitungsmaschine 10 kann der Akkumulator 56 mit in kurzer Zeit lösbaren und wieder herstellbaren Schnellanschlüssen an die Liefer-Schaltvorrichtung 52 angeschlossen sein sowie mit in kurzer Zeit lösbaren und wieder herstellbaren Schnellverschlüssen mit dem Maschinenrahmen 12 verbunden sein, sodass ein entladener Akkumulator, sofern keine ausreichende Zeit zu seiner Ladung zur Verfügung steht, erforderlichenfalls in kurzer Zeit gegen einen anderen, geladenen Akkumulator ausgetauscht werden kann.

Die an der Bodenbearbeitungsmaschine 10 vorgesehenen Elektromotoren sind generatorisch betreibbar, sodass im Falle von Verzögerungsvorgängen an den von den jeweiligen Elektromotoren angetriebenen Vorrichtungen, die an den Vorrichtungen abgebaute kinetische Energie rekuperiert und durch die Liefer-Schaltvorrichtung 52 dem Akkumulator 56 zugeführt und dort gespeichert werden kann.

## Patentansprüche

1. Selbstfahrende Bodenbearbeitungsmaschine (10), umfassend einen Maschinenrahmen (12) und ein den Maschinenrahmen (12) tragendes Fahrwerk (24), wobei das Fahrwerk (24) eine Mehrzahl von auf einem Aufstandsuntergrund (U) der Bodenbearbeitungsmaschine (10) abrollbaren Laufwerken (20, 22) umfasst, wobei der Maschinenrahmen (12) eine Arbeitsvorrichtung (34) zur Bodenbearbeitung trägt, wobei die Bodenbearbeitungsmaschine (10) als eine Hauptfunktionseinheit einen Arbeitsantrieb (80) aufweist, um die Arbeitsvorrichtung (34) zu einer für die Bodenbearbeitung bestimmungsgemäßen Arbeitsbewegung anzutreiben und wobei die Bodenbearbeitungsmaschine (10) wenigstens eine weitere Funktionseinheit (28, 44, 84, 90, 91, 98, 100, 102, 104, 106, 108) als einen mit Energie zu versorgenden Verbraucher aufweist, wobei die Bodenbearbeitungsmaschine (10) eine gemeinsame Kraftquelle (50) aufweist, welche sowohl die Energie für den Arbeitsantrieb (80) als auch die Energie für die wenigstens eine weitere Funktionseinheit (28, 44, 84, 90, 91, 98, 100, 102, 104, 106, 108) bereitstellt,
**dadurch gekennzeichnet, dass** die gemeinsame Kraftquelle (50) eine gemeinsame elektrische Liefer-Schaltvorrichtung (52) umfasst, an welche jede Funktionseinheit (28, 44, 80, 84, 90, 91, 98, 100, 102, 104, 106, 108) aus der Hauptfunktionseinheit (80) und der wenigstens einen weiteren Funktionseinheit (28, 44, 84, 90, 91, 98, 100, 102, 104, 106, 108) zur Übertragung von elektrischer Energie zwischen der Liefer-Schaltvorrichtung (52) und der jeweiligen Funktionseinheit (28, 44, 84, 90, 91, 98, 100, 102, 104, 106, 108) elektrisch leitend angeschlossen ist, wobei die Hauptfunktionseinheit (80) einen Elektromotor (80) zur Wandlung der an die Hauptfunktionseinheit (80) übertragenen elektrische Energie in Bewegungsenergie umfasst.

2. Selbstfahrende Bodenbearbeitungsmaschine (10) nach Anspruch 1,
**dadurch gekennzeichnet, dass** die gemeinsame elektrische Liefer-Schaltvorrichtung (52) einen Gleichstrom-Zwischenkreis (52a) umfasst oder ein solcher ist.

3. Selbstfahrende Bodenbearbeitungsmaschine (10) nach Anspruch 1 oder 2,
**dadurch gekennzeichnet, dass** zwischen wenigstens einer Funktionseinheit (28, 44, 80, 84, 90, 91, 98, 100, 102, 104, 106, 108) aus der Hauptfunktionseinheit (80) und der wenigstens einen weiteren Funktionseinheit (28, 44, 84, 90, 91, 98, 100, 102, 104, 106, 108) einerseits und der gemeinsamen elektrischen Liefer-Schaltvorrichtung (52) andererseits eine Leistungsschaltung (82, 88) zwischengeschaltet ist, welche wenigstens einen Parameter, der die von der Liefer-Schaltvorrichtung (52) in die Leistungsschaltung (82, 88) eingegebene elektrische Energie betragsmäßig charakterisiert, betragsmäßig verändert und die so modifizierte elektrische Energie zur Funktionseinheit (84, 90) ausgibt.

4. Selbstfahrende Bodenbearbeitungsmaschine (10) nach Anspruch 3,
**dadurch gekennzeichnet, dass** die Leistungsschaltung (82, 88) wenigstens eine Vorrichtung umfasst aus einem Gleichspannungswandler (88) und einem Wechselrichter (82).

5. Selbstfahrende Bodenbearbeitungsmaschine (10) nach einem der vorhergehenden Ansprüche,
**dadurch gekennzeichnet, dass** die wenigstens eine weitere Funktionseinheit (28, 44 84, 90, 91, 98, 100, 102, 104, 106, 108) eine Bewegungs-Funktionseinheit (44, 84, 90, 91, 98, 100, 102, 104, 106) umfasst, welche in sie eingegebene elektrische Energie in Bewegungsenergie umwandelt.

6. Selbstfahrende Bodenbearbeitungsmaschine (10) nach einem der vorhergehenden Ansprüche,
**dadurch gekennzeichnet, dass** die wenigstens eine weitere Funktionseinheit (28, 44, 84, 90, 91, 98, 100, 102, 104, 106, 108) eine Betriebs-Funktionseinheit (28, 108) umfasst, welche in sie eingegebene elektrische Energie einem bewegungslosen Verbraucher zuführt.

7. Selbstfahrende Bodenbearbeitungsmaschine (10) nach einem der vorhergehenden Ansprüche,
**dadurch gekennzeichnet, dass** die wenigstens eine weitere Funktionseinheit (28, 44, 84, 90, 91, 98, 100, 102, 104, 106, 108) wenigstens eine Einheit umfasst aus
- einem Bewegungsantrieb (44), um die Bodenbearbeitungsmaschine (10) zu einer Fahrbewegung auf dem Aufstandsuntergrund (U) anzutreiben,
- einem Lüfterantrieb (91), um einen an der Bodenbearbeitungsmaschine (10) angeordneten Lüfter (93) zur Bewegung anzutreiben,
- einem Pumpenantrieb (84, 90), um wenigstens eine Pumpe (86, 94, 96) zur Förderung eines Fluids anzutreiben,
- einem Fördervorrichtungsantrieb (106), um eine Fördervorrichtung (36) zum Förderbetrieb anzutreiben,
- einem Stellantrieb (104), um eine relative Lage einer Funktionseinheit (36) relativ zum Maschinenrahmen (12) zu verändern,
- einem Lenkantrieb (100, 102), um den Lenkwinkel wenigstens eines Laufwerks (20, 22) relativ zum Maschinenrahmen (12) zu verändern,
- einem Bordnetz,
- einer elektrischen Beleuchtung (108) oder/und elektrische Signalanlage der Bodenbearbeitungsmaschine (10),
- einer elektrischen Steuervorrichtung (28).

8. Selbstfahrende Bodenbearbeitungsmaschine (10) nach Anspruch 7,
**dadurch gekennzeichnet, dass** die wenigstens eine weitere Funktionseinheit (28, 44, 84, 90, 91, 98, 100, 102, 104, 106, 108) wenigstens einen Pumpenantrieb (84, 90) umfasst, wobei der wenigstens eine Pumpenantrieb (84, 90) wenigstens eine der folgenden Ausgestaltungen aufweist:
- ein Elektromotor (90) treibt unter Zwischenanordnung eines Pumpenverteilergetriebes (92) eine Mehrzahl von Pumpen (94, 96) an, und
- ein Elektromotor (84) treibt, gegebenenfalls unter Zwischenanordnung eines Getriebes, bevorzugt eines drehzahluntersetzenden Getriebes, genau eine Pumpe (86) an.

9. Selbstfahrende Bodenbearbeitungsmaschine (10) nach Anspruch 8,
**dadurch gekennzeichnet, dass** wenigstens eine angetriebene Pumpe (86) eine Konstantpumpe (86) ist, deren Fördervolumen oder/und Förderdruck durch Änderung der Pumpendrehzahl änderbar ist.

10. Selbstfahrende Bodenbearbeitungsmaschine (10) nach einem der vorhergehenden Ansprüche,
**dadurch gekennzeichnet, dass** die die gemeinsame Kraftquelle (50) mit der gemeinsamen elektrischen Liefer-Schaltvorrichtung (52) dazu ausgebildet ist, während eines Verzögerungsvorgangs einer an die Liefer-Schaltvorrichtung (50) elektrisch leitend angeschlossenen Bewegungs-Funktionseinheit (44, 80, 84, 90, 91, 98, 100, 102, 104, 106) einschließlich der Hauptfunktionseinheit (80) Bewegungsenergie der Bewegungs-Funktionseinheit (44, 80, 84, 90, 91, 98, 100, 102, 104, 106) als elektrische Energie zu rekuperieren.

11. Selbstfahrende Bodenbearbeitungsmaschine (10) nach einem der vorhergehenden Ansprüche,
**dadurch gekennzeichnet, dass** die gemeinsame Kraftquelle (50) eine Primärenergiequelle (54) umfasst, welche an die gemeinsame elektrische Liefer-Schaltvorrichtung (52) elektrisch leitend angeschlossen ist, wobei die Primärenergiequelle (54) wenigstens eine der folgenden Quelleinheiten umfasst:
- Akkumulator (56),
- Batterie,
- Generator (78),
- Brennstoffzellenanordnung (79),
- Photovoltaikeinheit (72),
- Stromabnehmer (58),
- Verbindungsschnittstelle (66) zur Verbindung mit einer externen Stromquelle.

12. Selbstfahrende Bodenbearbeitungsmaschine (10) nach Anspruch 11,
**dadurch gekennzeichnet, dass** die gemeinsame Kraftquelle (50) zusätzlich zur Primärenergiequelle (54) wenigstens eine Sekundärenergiequelle umfasst, welche an die gemeinsame elektrische Liefer-Schaltvorrichtung (52) elektrisch leitend angeschlossen ist, wobei die Sekundärenergiequelle wenigstens eine der folgenden Quelleinheiten umfasst:
- Akkumulator (56),
- Batterie,
- Generator (78),
- Brennstoffzellenanordnung (79),
- Photovoltaikeinheit (72),
- Stromabnehmer (58),
- Verbindungsschnittstelle (66) zur Verbindung mit einer externen Stromquelle (PN).

13. Selbstfahrende Bodenbearbeitungsmaschine (10) nach Anspruch 11 oder 12, **dadurch gekennzeichnet, dass** zwischen wenigstens einer Energiequelle (54, 58, 66, 72) aus der Primärenergiequelle (54) und der Sekundärenergiequelle (58, 66, 72) einerseits und der gemeinsamen elektrischen Liefer-Schaltvorrichtung (52) andererseits eine Einspeiseschaltung (62, 64, 74) zwischengeschaltet ist, welche wenigstens einen Parameter, der die von der Energiequelle (58, 66, 72) in die Einspeiseschaltung (62, 64, 74) eingegebene elektrische Energie betragsmäßig charakterisiert, betragsmäßig verändert und die so modifizierte elektrische Energie an die gemeinsame elektrische Liefer-Schaltvorrichtung (52) ausgibt.

14. Selbstfahrende Bodenbearbeitungsmaschine (10) nach Anspruch 13,
**dadurch gekennzeichnet, dass** die Einspeiseschaltung (62, 64, 74) wenigstens eine Vorrichtung umfasst aus einem Gleichrichter (62, 64) und einem Gleichspannungswandler (74).

15. Selbstfahrende Bodenbearbeitungsmaschine (10) nach einem der vorhergehenden Ansprüche,
**dadurch gekennzeichnet, dass** die Bodenbearbeitungsmaschine (10) zum Betrieb eines bordeigenen Generators (78) eine Brennkraftmaschine (76) aufweist, wobei die Leistung der Brennkraftmaschine 50 % der Nenn-Gesamtbetriebsleistung der Bodenbearbeitungsmaschine (10), insbesondere der Liefer-Schaltvorrichtung (52) nicht übersteigt, oder von einer Brennkraftmaschine (76) frei ist.
